(19)

Europäisches
Patentamt
European
Patent Office
Office européen
des brevets

(11) **EP 1 489 776 B1**

(12) **EUROPEAN PATENT SPECIFICATION**

(45) Date of publication and mention
of the grant of the patent:
**19.03.2008 Bulletin 2008/12**

(51) Int Cl.:
***H04L 7/04*** *(2006.01)*

(21) Application number: **04014006.3**

(22) Date of filing: **15.06.2004**

(54) **Method and apparatus for generating preamble using chaotic sequence**

Verfahren und Gerät zum Erzeugen einer Präambel mittels einer chaotischen Folge

Procédé et dispositif de génération d'une préambule à l'aide d'une séquence chaotique

(84) Designated Contracting States:
**DE FI FR GB NL SE**

(30) Priority: **18.06.2003 US 479220 P**
**15.10.2003 KR 2003071618**

(43) Date of publication of application:
**22.12.2004 Bulletin 2004/52**

(73) Proprietors:
• **SAMSUNG ELECTRONICS CO., LTD.**
**Suwon-si,**
**Gyeonggi-do (KR)**
• **Institute of radio engineering and electronics of RAS**
**101999 Moscow (RU)**

(72) Inventors:
• **Lee, Ye-hoon**
**Yeongtong-dong, Yeongtong-gu, Suwon-si (KR)**
• **Kim, Yong-suk**
**Gwanjeo-dong, Seo-gu, Daejeon (KR)**
• **Dmitriev, Alexandre**
**121609 Moscow (RU)**
• **Starkov, Sergey**
**121609 Moscow (RU)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A1- 2001 038 674**

• **DMITRIEV A S ET AL: "HIGH-RATE DIGITAL DATA TRANSMISSION USING DYNAMIC CHAOS" SOVIET JOURNAL OF COMMUNICATIONS TECHNOLOGY AND ELECTRONICS, SCRIPTA TECHNICA, SILVER SPRING, MD, US, vol. 44, no. 3, March 1999 (1999-03), pages 302-306, XP000828406 ISSN: 8756-6648**
• **A.S. DIMITRIEV, B.E. KYARGINSKII, A.I. PANAS, D.YU. PUZIKOV, S.O. STARKOV: "Experiments on Ultrawideband Direct Chaotic Data Transmission in the Microwave Band" JOURNAL OF COMUNICATIONS TECHNOLOGY AND ELECTRONICS, vol. 47, no. 10, 2002, pages 1112-1120, XP009070809**
• **ZAKHAROV Y V ET AL: "Detection of preamble of random access burst in W-CDMA system" PERSONAL, INDOOR AND MOBILE RADIO COMMUNICATIONS, 2000. PIMRC 2000. THE 11TH IEEE INTERNATIONAL SYMPOSIUM ON SEPT. 18-21, 2000, PISCATAWAY, NJ, USA,IEEE, 18 September 2000 (2000-09-18), pages 82-86, XP010520608 ISBN: 0-7803-6463-5**

**Description**

<u>CROSS-REFERENCE TO RELATED APPLICATIONS</u>

This application claims the benefit of U.S. Provisional Patent Application No. 60/479,220 filed June 18, 2003 in the U.S. Patent and Trademark Office, and Korean Patent Application No. 2003-71618 filed October 15, 2003.

<u>BACKGROUND OF THE INVENTION</u>

**Field of the Invention**

The present invention relates to a method and an apparatus for generating a preamble, and more particularly, to a method and an apparatus for generating a preamble which is suitable for an ultra-wideband communication system supporting multi-piconet technology using a chaotic sequence.

**Description of the Related Art**

A preamble signal is used in the timing synchronization of signals transmitted between at least two systems. The preamble indicates that a certain system is about to transmit data, and is defined by a string of certain transmission pulses recognized by the communication systems. Reliable timing ensures correct translation of the beginning of information transmission of all the communication systems, and also ensures that all the receiving systems accurately understand when the data transmission begins. Pulses for a preamble vary depending on the network technologies adopted.

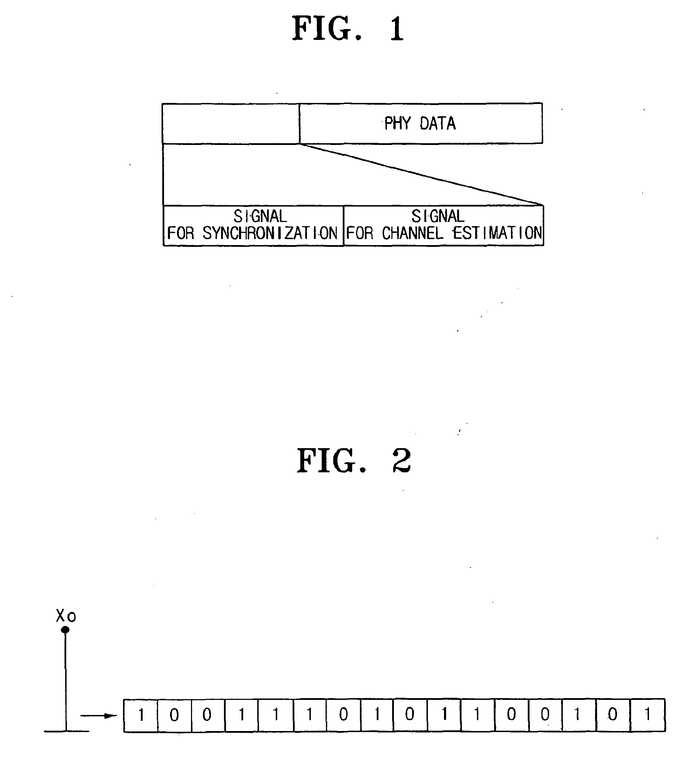

FIG. 1 shows the structure of a general preamble. As shown, a preamble generally includes a signal for synchronization, a signal for channel estimation and data for a physical sub-layer. In the communication system, the preamble synchronizes frames and estimates signal degradation in the channel used.

A method for generating a preamble according to the preamble of claim 1 and a preamble generating apparatus according to the preamble of claim 6 are known from Dmitriev A. S. et al: "High-Rate Digital Data Transmission using Dynamic Chaos", Soviet Journal of Communications Technology and Electronics, Scripta Technica, Silver Spring, US, vol. 44, no. 3, March 1999, pages 302-306.

Further, United States Patent Application Laid-open Publication No. US 2001/0038674 relates to data communication media interfaces, which send and receive coded digital data signal at high speeds over digital communication signals. Thereby, Pseudo Random Noise (PN) sequence codes are used as a preamble for a master and slave to perform a node autocorrelation level detection.

Generally, 'ultra high frequency communication system' refers to a system that supports ultra high frequency wireless communications services between a piconet coordinator (PNC) and a device (DEV). For synchronization between the PNC and DEV, a synchronous signal is periodically transmitted to indicate the beginning of the frames. The DEV receives the synchronous signal, synchronizes a frame to the PNC, and estimates signal degradation that may have occurred in the channel to utilize it in the wave detection of the data being received after the frame synchronization. As for the synchronous signal, it is common for a preamble signal agreed upon between the PNC and the DEV to be used.

The DEV receives the preamble signals which are periodically received from the PNC, and determines the frame synchronization in accordance with the strength of the signals being outputted through an internal correlator. The reception performance of the preamble signal depends on the auto-corrrelation property, and a higher auto-correlation property is required.

There are usually a plurality of piconets existing in the ultra-wideband communication system, and interference between neighboring piconets usually causes deterioration in wave detection. Interference with neighboring piconets can also occur in the reception of the preamble signal, which usually degrades the frame synchronization performance. A preamble signal has to be designed with the above-mentioned considered. Further, the preamble signal has to have a good cross-correlation property to support multiple piconets, which means the preamble signal requires a low cross-correlation property.

A similar use of the above-mentioned preamble is found in a UMTS (Universal Mobile Telecommunication System) of wideband CDMA. The UMTS has a plurality of slots in the frame, and a synchronous signal indicating the beginning of the slots. The frame synchronous signal is periodically transmitted between a base station and a terminal according to a predetermined sequence. However, because the UMTS is designed to operate optimally in a cellular communication environment, it is somewhat impractical to employ it in an ultra-wideband communication system. Accordingly, a preamble, which is optimum for use in ultra-wideband communication, is required.

## SUMMARY OF THE INVENTION

The present invention has been developed in order to solve the above drawbacks and other problems associated with the conventional arrangement. An aspect of the present invention is to provide an apparatus and a method for generating a preamble suitable for use in an ultra-wideband communication system.

The above object is achieved by a preamble generating method according to claim 1 and by a preamble generating apparatus according to claim 6.

Preferred embodiments of the preamble generating method and of the preamble generating apparatus are subject to the dependent claims, respectively.

## BRIEF DESCRIPTION OF THE DRAWINGS

The above aspects and features of the present invention will be more apparent by describing certain embodiments of the present invention with reference to the accompanying drawings, in which:

FIG. 1 illustrates the structure of a general preamble;

FIG. 2 illustrates one chaotic sample converted into a 16-bit length chaotic sequence bit;

FIG. 3 illustrates a 64-bit length chaotic sequence bit generated by using 4 chaotic samples;

FIG. 4 is a block diagram of one example of an apparatus which successively generates chaotic samples;

FIG. 5 illustrates one example of a chaotic mapping function, and attaining 4 chaotic samples using the same;

FIGS. 6A to 6D illustrate one example of an easily-achievable chaotic mapping function;

FIGS. 7A and 7B illustrate an asymmetric tent chaotic mapping function and an inverse mapping function;

FIG. 8 illustrates an initial value determination method for multiple piconets;

FIG. 9 illustrates a variety of initial values for 4 piconets;

FIG. 10 simulates the synchronization performance of the preamble which is generated by the preamble generating method using a chaotic sequence according to an embodiment of the present invention;

FIG. 11 illustrates an auto-correlation property of the 64-bit length chaotic sequence which is generated by the preamble generating method using a chaotic sequence according to an embodiment of the present invention;

FIG. 12 illustrates a cross-correlation property of the 64-bit length chaotic sequence which is generated by the preamble generating method using a chaotic sequence according to an embodiment of the present invention;

FIG. 13 illustrates the distance (DIST) of the preamble which is generated by the preamble generating method using a chaotic sequence according to an embodiment of the present invention versus bit error rate (BER) in the CM1 channel for performance comparison with other sequences;

FIG. 14 illustrates the distance (DIST) of the preamble which is generated by the preamble generating method using a chaotic sequence according to an embodiment of the present invention versus bit error rate (BER) in the CM2 channel for performance comparison with other sequences;

FIG. 15 illustrates the distance (DIST) of the preamble which is generated by the preamble generating method using a chaotic sequence according to an embodiment of the present invention versus bit error rate (BER) in the CM3 channel for performance comparison with other sequences; and

FIG. 16 illustrates the distance (DIST) of the preamble which is generated by the preamble generating method using a chaotic sequence according to an embodiment of the present invention versus bit error rate (BER) in the CM4 channel for performance comparison with other sequences.

## DETAILED DESCRIPTION OF THE PREFERRED EMBODIMENTS

Certain embodiments of the present invention will be described in greater detail with reference to the accompanying drawings.

In the following description, identical drawing reference numerals are used for the same elements even in different drawings. The matters defined in the description such as a detailed construction and elements are provided to assist in a comprehensive understanding of the invention. The present invention can be carried out without those defined matters. Also, well-known functions or constructions are not described in detail since they would obscure the invention in unnecessary detail.

FIG. 2 shows one chaotic sample transformed into a 16-bit length chaotic sequence bit. Referring to FIG. 2, a chaotic sample $X_0$ of certain value is transformed by proper quantization into a 16-bit length binary value which is represented by fixed decimal. In order to generate a chaotic sequence bit of 64-bit or 128-bit length, 4 or 8 successive chaotic samples are generated and transformed into a 16-bit length binary value and used.

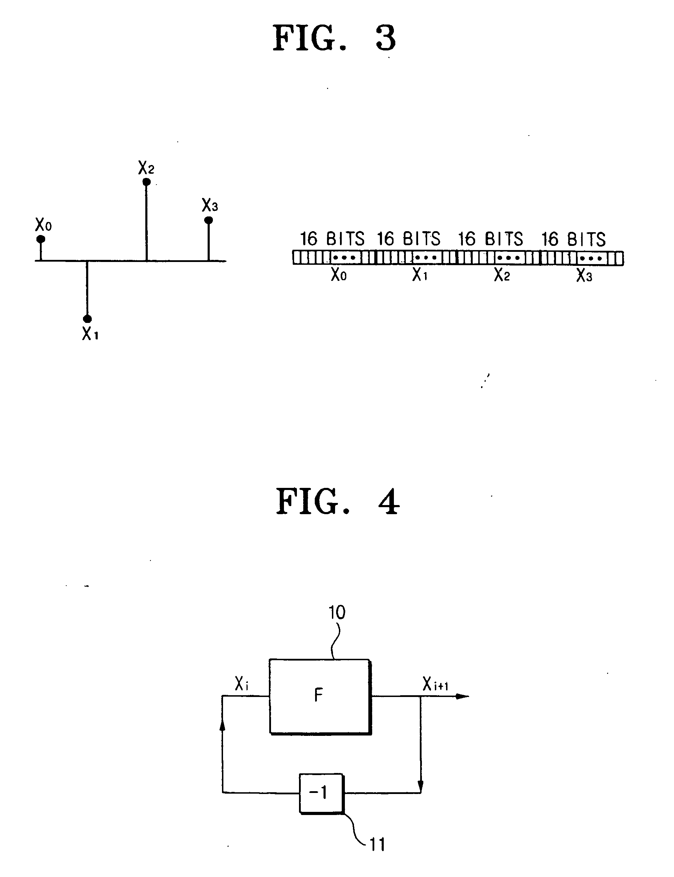

FIG. 3 illustrates the generation of a 64-bit length chaotic sequence bit by using 4 successive chaotic samples. Referring to FIG. 3, 4 chaotic samples $X_0$, $X_1$, $X_2$, $X_3$ are each transformed into a 16-bit binary value, and successively used for generating up to 64 bits of chaotic sequence bits. The chaotic sequence bits are used in the preamble.

Meanwhile, when the initial value $X_0$ is determined, 4 chaotic samples can be generated using a proper chaotic mapping function. That is, by substituting the initial value $X_0$ in a chaotic mapping function F, it is possible to obtain the next chaotic sample $X_1$, and by substituting the next chaotic sample $X_1$ in the chaotic mapping function F, it is possible to obtain the chaotic sample $X_2$ next to the next chaotic sample $X_1$. By several iterations, a desired number of chaotic samples are attained, and this can be expressed by the following function:

## [Function 1]

$$X_{k+1} = F(X_k)$$

where, k=0, 1, 2, 3, ...

By using chaotic samples $X_0$, $X_1$, $X_2$, $X_3$, a 64-bit length chaotic sequence as shown in FIG. 3 can be attained. In order to obtain a 128-bit length chaotic sequence bit, 8 chaotic samples are used.

FIG. 4 is a block diagram illustrating one example of an apparatus which can successively generate chaotic samples. The apparatus as shown in FIG. 4 comprises a chaotic mapping part 10 and a delay part 11. The chaotic mapping part 10 substitutes input $X_i$ in a predetermined chaotic mapping function, to output a chaotic sample $X_{i+1}$. The delay part 11 delays the output value $X_{i+1}$ for a predetermined time and feeds back the same to the input of chaotic mapping part 10. By iterating this process a predetermined number of times, a desired number of chaotic samples are generated. The chaotic samples as generated are converted into chaotic sequence bits and used for the preamble. A variety of mathematical functions can be used as a chaotic mapping function in the chaotic mapping part 10, and simplicity and easy achievability of the algorithm are considered when selecting a chaotic mapping function.

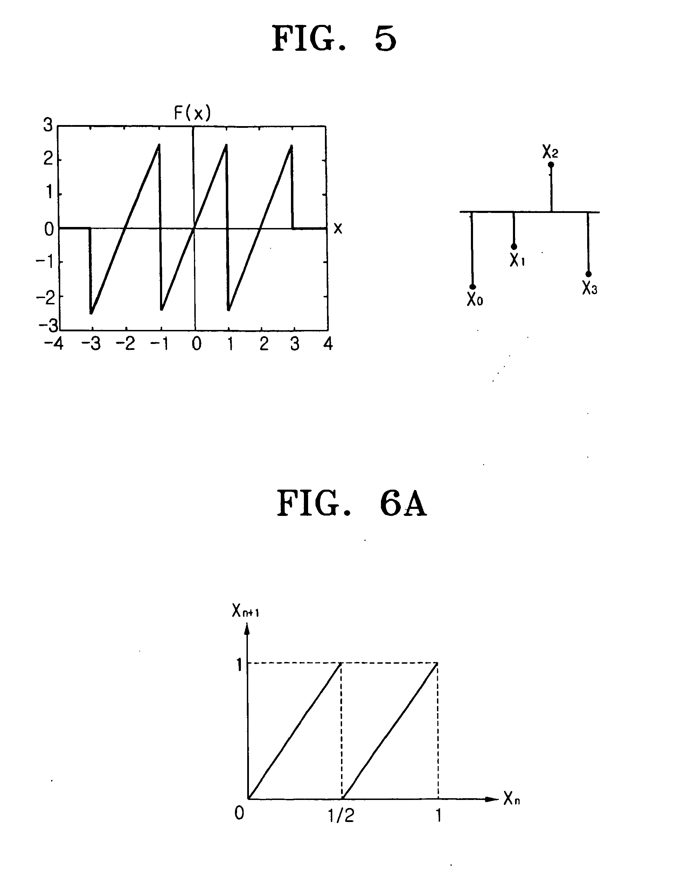

FIG. 5 shows one example of a chaotic mapping function and the process of attaining 4 chaotic samples by using the chaotic mapping function. Referring to FIG. 5, an initial value $X_0$ is substituted in the mapping function F(x) so that a value $X_1$ is derived, and by substituting the value $X_1$ in the mapping function F(x), a next value $X_2$ is obtained. By the above iteration, the following values, $X_3$ and $X_4$, are obtained. For example, if $X_0$ = -0.9922, values $X_1$, $X_2$, $X_3$ and corresponding binary values are:

$$
\begin{aligned}
X_0 &= -0.9922, &&101001101100010 \\
X_1 &= -0.4904, &&100100110010100 \\
X_2 &= 0.7690, &&000111100001010 \\
X_3 &= -0.9800, &&101001100100100
\end{aligned}
$$

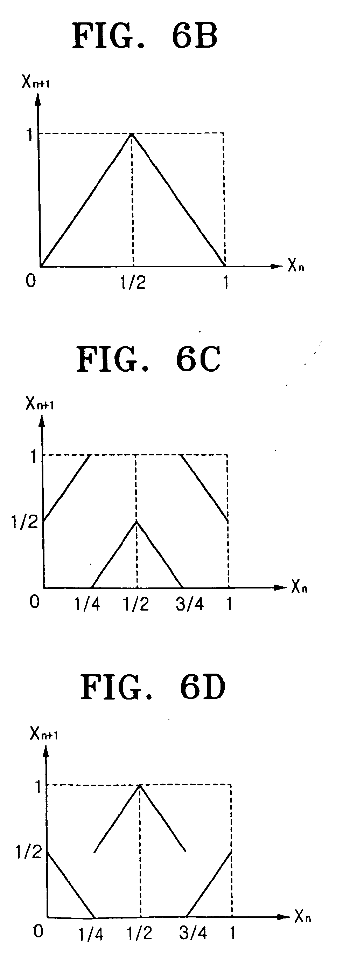

FIGS. 6A through 6D show an example of a chaotic mapping function which is simple to achieve. FIG. 6A shows a Bernoulli shift map, FIG. 6B a tent map, FIG. 6C a twisted tent map, and FIG. 6D is a ship map. As shown, a variety of maps can be used as a chaotic mapping function, according to which chaotic samples are obtained and chaotic sequence bits are obtained from the generated chaotic samples.

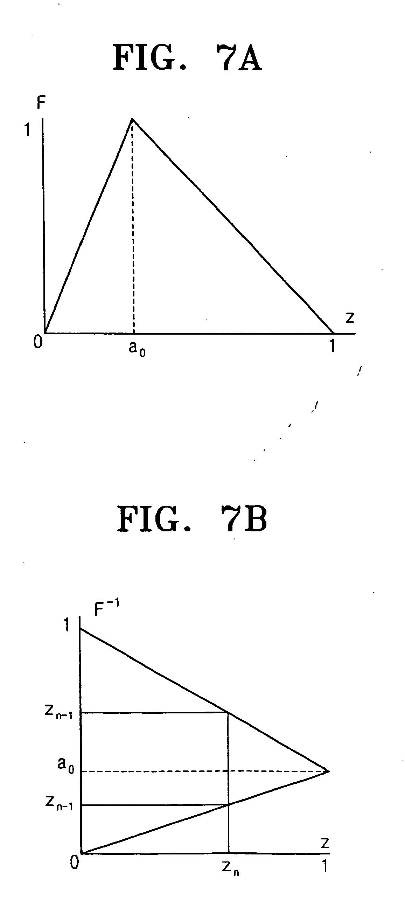

FIG. 7A shows an asymmetric tent chaotic mapping function, and FIG. 7B shows an inverse mapping function of the asymmetric chaotic mapping function of FIG. 7A. As shown in FIGS. 7A and 7B, an initial value can be determined by using the inverse mapping function of the chaotic mapping function. More specifically, an initial value $Z_0$ can be determined by iterating an inverse mapping function $F^{-1}$ of the chaotic mapping function.

## [Functions 2]

$$
\begin{aligned}
Z_2 &= F^{-1}(Z_3) \\
Z_1 &= F^{-1}(Z_2) \\
Z_0 &= F^{-1}(Z_1)
\end{aligned}
$$

The above method can be used in determining an initial value of the piconet-supporting chaotic sequence bits.

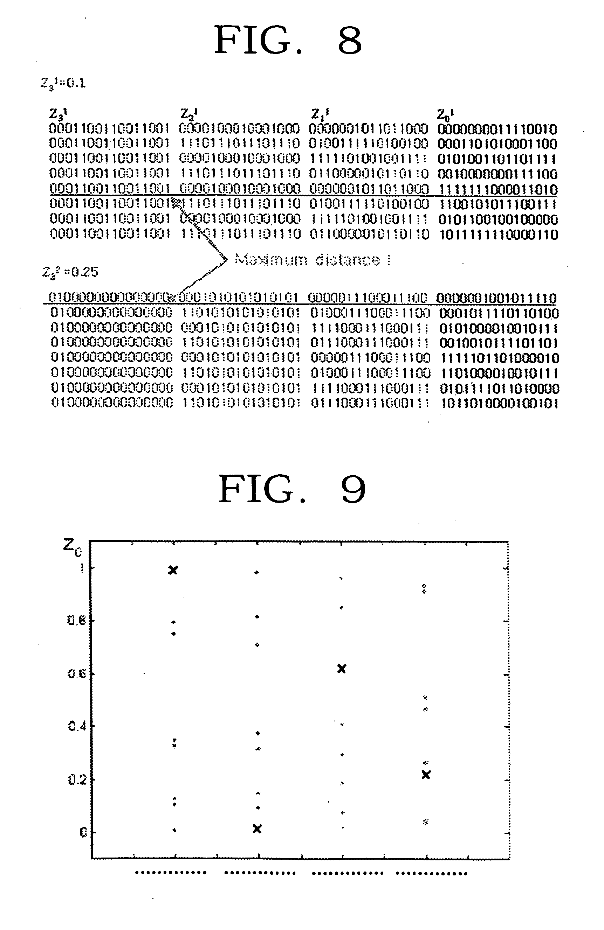

The last samples $Z_3^1 = 0.1$, $Z_3^2 = 0.25$ of the first piconet and the second piconet are substituted in the above functions 2 by periodic orbits, and the values as shown in FIG. 8 are obtained.

A value can be selected as an initial value among the chaotic sequence bits to obtain maximum distance as possible. In the same way, an initial value for 4 or more picoents can be obtained, and by using the selected initial value, a low cross-correlation property can be obtained.

FIG. 9 illustrates a variety of initial values for 4 piconets. As shown, by properly selecting initial values for the 4 piconets, a good preamble, that is, the preamble contributing to an improved cross-correlation property can be generated for use in the multi-piconet supporting communication system.

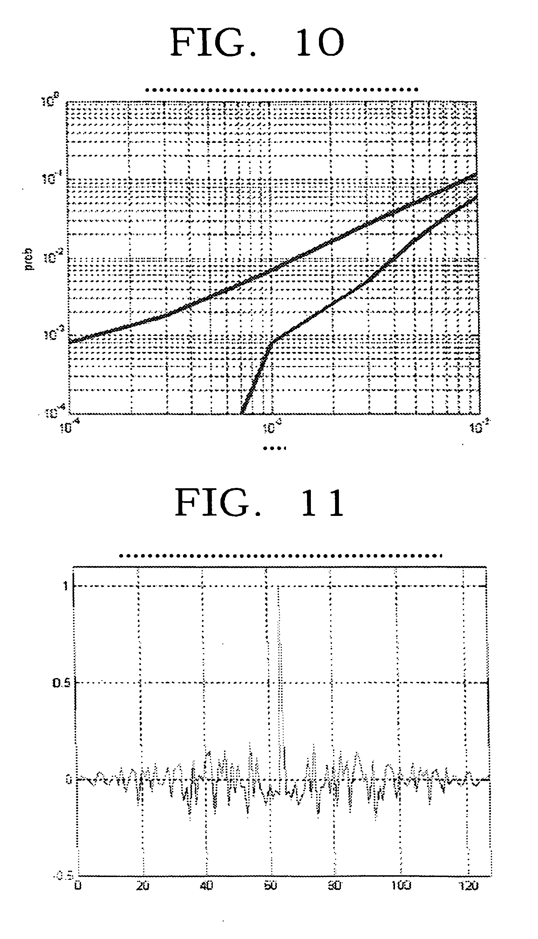

FIG. 10 simulates the synchronization performance with the preamble generated in accordance with the preamble generating method using a chaotic sequence according to one embodiment of the present invention. In the simulation, a preamble generated by 4 chaotic samples was used, and synchronization was attempted up to 1000 times. FIG. 10 shows the probability of synchronization failure vs. bit error rate (BER). More specifically, FIG. 10 shows the probability of the synchronization failure when the receptivity of the first bit of the preamble sequence was poorest, that is, the case when the probability of synchronization of the first bit was assumed to be 1/2.

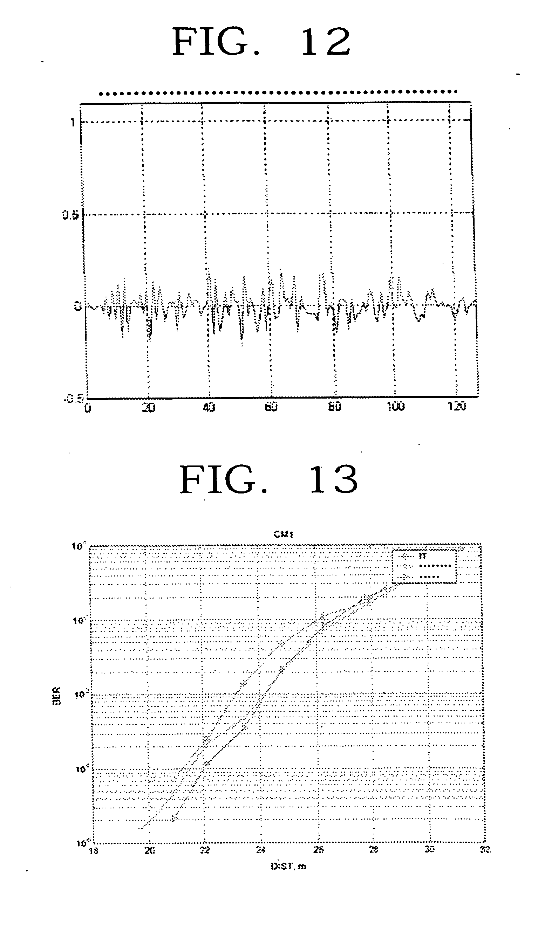

FIGS. 11 and 12 illustrate auto-correlation and cross-correlation properties of a chaotic sequence which is generated by a preamble generating method using a chaotic sequence according to one embodiment of the present invention. As shown, the chaotic sequence generated in accordance with the present invention has a high auto-correlation coefficient and low cross-correlation coefficient.

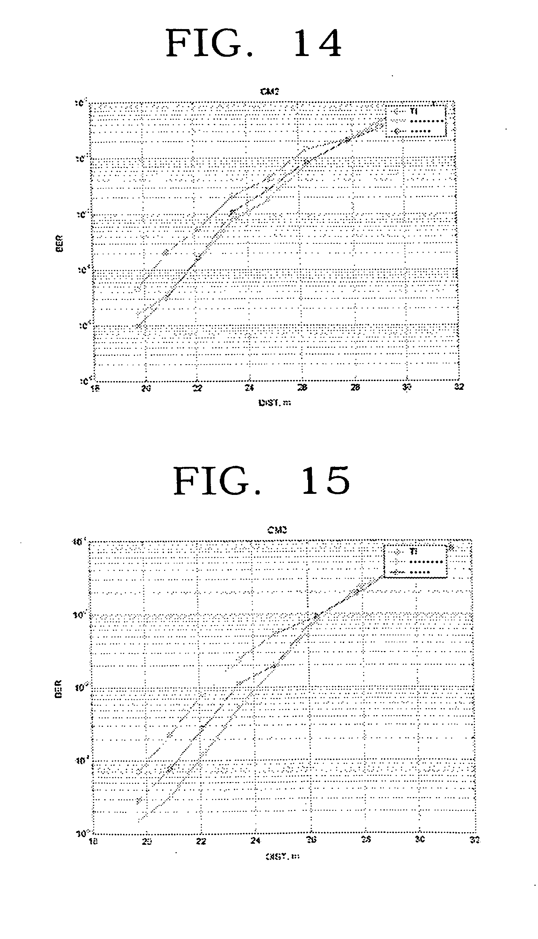

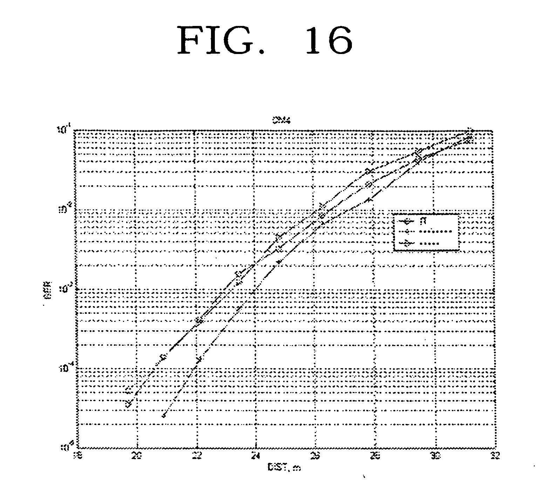

FIGS. 13 through 16 illustrate distance vs. BER of a preamble by one embodiment of the present invention, respectively showing performance compared with other sequences in the channels of CM1, CM2, CM3 and CM4. In the example as shown in FIGS. 13 through 16, the sequence by the present invention was compared with a Gold sequence and a sequence proposed by Texas Instruments (TI) (IEEE P802.15-3/142r0). As shown, the chaotic sequence according to the present invention provides superior performance to the other sequences as the channelsdegrade, such as in the channels of CM3 and CM4.

The following table lists results of a comparison between the chaotic sequence (CSS) by the preamble generating method according to one embodiment of the present invention, and the constant amplitude zero auto-correlation (CAZAC) sequence.

[Table 1]

|  | CSS | CZACA |
|---|---|---|
| Processing technique | Subsequent processing of the input samples | Correlation technique |
| Length (bit) | 64 (potential It<40) | 128 |
| Piconet identification | Yes | No |
| Number of available piconets | Plural | 1 (for BPSK under UWB) |
| Implementation | Respectively simple |  |
| Channel characteristics | High SNR | SNR ~ - 10dB |
| Stability | Yes<br>a) by choice unique map<br>b) by choice of unique map parameters | No |
| External time synchronization | No | Yes |

As shown in the Table 1, it is simpler to generate preambles by using a chaotic sequence, and is also more feasible to generate preambles suitable for an ultra-wideband communication system which supports multi-piconets by using chaotic sequence.

As described above in a few exemplary embodiments of the present invention, a preamble of optimum auto-correlation and cross-correlation properties can be generated by using a sequence bit with a chaotic sample. By using the preamble generated according to the present invention, good data reception is guaranteed even under changes in channel environment and piconet environment.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1.  A preamble generating method, comprising:

    (a) computing N chaotic samples; and
    (b) transforming the N chaotic samples into N binary values of certain bits, respectively, and computing a chaotic sequence bit successively using the N binary values; wherein the N chaotic-samples are represented by $X_i$, and are computed by using a chaotic mapping function F by periodic orbits, the chaotic mapping function F being expressed by $X_{k+1} = F(X_k)$, where $X_0$ is an initial value, and k = 0, 1, 2, 3, ...;
    **characterized in**
    **that** the method further comprises the steps of
    (c) generating a preamble based on the chaotic sequence bit;
    (d) computing an inverse mapping function $F^{-1}$ of the chaotic mapping function F, using the inverse mapping function $F^{-1}$ with respect to M different chaotic samples by periodic orbits, and computing a plurality of initial values for the M chaotic samples, respectively;
    (e) among the plurality of initial values computed for the M chaotic samples, selecting M initial values which are at a maximum distance from each other; and
    (f) generating M preambles with respect to the M selected initial values, by performing the steps (a) - (c), respectively.

2.  The preamble generating method of claim 1, **characterized in that** the chaotic mapping function (F) uses one of a Bernoulli shift map, a tent map, a twisted tent map, and a ship map.

3.  The preamble generating method of claim 1, **characterized in that** the preamble is used in an ultra-wideband communication system which supports multi-piconets, and the number of the multi-piconets is M.

4.  The preamble generating method of claim 1, **characterized in that** the certain bits comprise 16 bits.

5.  The preamble generating method of claim 1, **characterized in that** the number N comprises one of 4 and 8.

6.  A preamble generating apparatus, comprising:

    a chaotic sample computing part operable to compute N chaotic samples, wherein the N chaotic-samples are represented by $X_i$ and are computed by using a chaotic mapping function F by periodic orbits, the chaotic mapping function F being expressed by $X_{k+1} = F(X_k)$, where $X_0$ is an initial value, and k = 0, 1, 2, 3, ...; and
    a chaotic sequence computing part operable to transform the N chaotic samples into N binary values of certain bits, respectively, and compute a chaotic sequence bit by successively using N binary values,
    **characterized in**
    **that** the preamble generating apparatus further comprises
    an initial value computing part operable to compute an inverse mapping function $F^{-1}$ of the chaotic mapping function F, to use said inverse mapping function $F^{-1}$ with respect to M different chaotic samples by periodic orbits and to compute a plurality of initial values for the M chaotic samples,
    an initial value selecting part operable to select M initial values which are at a maximum distance from each other among the plurality of initial values computed for the M chaotic samples; and
    a preamble generating part operable to generate a preamble based on the chaotic sequence bit to generate M preambles with respect to the M selected initial values, respectively.

7.  The preamble generating apparatus of claim 6, **characterized in that** the chaotic sample computing part comprises:

    a chaotic mapping function part (10) operable to substitute an input value ($X_i$) in a chaotic mapping function and output the result ($X_{i+1}$); and
    a delay part (11) operable to delay the output result ($X_{i+1}$) of the chaotic mapping function by a predetermined time, and provide the delayed values as the input value ($X_i$) to the chaotic mapping function part (10).

8.  The preamble generating apparatus of claim 7, **characterized in that** the chaotic mapping function comprises one of at least a Bernoulli shift map, a tent map, a twisted tent map, and a ship map.

9.  The preamble generating apparatus of claim 6, **characterized in that** the certain bits comprise 16 bits.

10. The preamble generating apparatus of claim 6, **characterized in that** the number N comprises one of 4 and 8.

11. The preamble generating apparatus of claim 6, **characterized in that** the preamble is used in synchronization and channel estimation in an ultra-wideband communication system.

## Patentansprüche

1.  Verfahren zum Erzeugen einer Präambel umfassend:

    (a) Berechnen von N chaotischen Samples; und
    (b) Umformen der N chaotischen Samples in entsprechend N binäre Werte von bestimmten Bits, und Berechen einer chaotischen Bitfolge durch sukzessives Verwenden der N binären Werte, wobei die N chaotischen Samples durch $X_i$ dargestellt und unter Verwendung einer chaotischen Abbildungsfunktion F durch periodische Orbits berechnet werden, wobei die chaotische Abbildungsfunktion F durch $X_{k+1} = F(X_k)$ mit $X_0$ als Anfangswert und k = 0, 1, 2, 3, ... angegeben wird;
    **dadurch gekennzeichnet,**
    **dass** das Verfahren weiterhin die Schritte umfasst:
    (c) Erzeugen einer Präambel basierend auf der chaotischen Bitfolge;
    (d) Berechnen einer invertierten Abbildungsfunktion $F^{-1}$ der chaotischen Abbildungsfunktion F, Verwenden der invertierten Abbildungsfunktion $F^{-1}$ in Bezug auf M unterschiedliche chaotische Samples durch periodische Orbits, und Berechnen einer Vielzahl an entsprechenden Anfangswerten für die M chaotischen Samples;
    (e) Auswählen von M Anfangswerten mit einem maximalen Abstand zueinander aus der Vielzahl der für die M chaotischen Samples berechneten Anfangswerten,
    (f) Erzeugen von M Präambeln in Bezug auf die M ausgewählten Anfangswerten durch entsprechendes Anwenden der Schritte (a) - (c).

2.  Verfahren zum Erzeugen einer Präambel nach Anspruch 1, **dadurch gekennzeichnet, dass** die chaotische Abbildungsfunktion F eine Bernoulli Shift-Map, eine Tent-Map, eine pervertierte Tent-Map oder eine Ship-Map verwendet.

3.  Verfahren zum Erzeugen einer Präambel nach Anspruch 1, **dadurch gekennzeichnet, dass** die Präambel in einem Multi-Piconet unterstützenden Ultrabreitband-Kommunikationssystem verwendet wird, wobei die Anzahl der Multi-Piconet's M entspricht.

4.  Verfahren zum Erzeugen einer Präambel nach Anspruch 1, **dadurch gekennzeichnet, dass** die bestimmten Bits 16 Bits umfassen.

5.  Verfahren zum Erzeugen einer Präambel nach Anspruch 1, **dadurch gekennzeichnet, dass** die Anzahl N 4 oder 8 umfasst.

6.  Vorrichtung zum Erzeugen einer Präambel umfassend:

    einen Berechnungsteil für chaotische Samples betreibbar zum Berechnen von N chaotischen Samples, wobei die N chaotischen Samples durch $X_i$ dargestellt und unter Verwendung einer chaotischen Abbildungsfunktion F durch periodische Orbits berechnet werden, wobei die chaotische Abbildungsfunktion F durch $X_{k+1} = F(X_k)$ mit $X_0$ als Anfangswert und k = 0, 1, 2, 3, ... angegeben wird; und
    einen Berechnungsteil für chaotische Folgen betreibbar zum Umformen der N chaotischen Samples in entsprechende N binäre Werte von bestimmten Bits und zum Berechnen einer chaotischen Bitfolge durch sukzessives Verwenden der N binären Werte,
    **dadurch gekennzeichnet,**
    **dass** die Vorrichtung zum Erzeugen einer Präambel weiterhin umfasst:

    einen Anfangswert-Berechnungsteil betreibbar zum Berechnen einer invertierten Abbildungsfunktion $F^{-1}$

der chaotischen Abbildungsfunktion F, zum Verwenden der invertierten Abbildungsfunktion $F^{-1}$ in Bezug auf M unterschiedlich chaotische Samples durch periodische Orbits, und zum Berechnen einer Vielzahl an entsprechenden Anfangswerten für die M chaotischen Samples;
einen Anfangswert-Auswahlteil betreibbar zum Auswählen von M Anfangswerten mit einem maximalen Abstand zueinander aus der Vielzahl der für die M chaotischen Samples berechneten Anfangswerten,
einen Präambel-Erzeugungsteil betreibbar zum Erzeugen einer Präambel basierend auf der chaotischen Bitfolge zum Erzeugen von M Präambeln mit Bezug auf die entsprechenden M ausgewählten Anfangswerten.

7. Vorrichtung zum Erzeugen einer Präambel nach Anspruch 6, **dadurch gekennzeichnet, dass** der Berechnungsteil für chaotische Samples umfasst:

   einen chaotischen Abbildungsfunktionsteil (10) betreibbar zum Substituieren eines Eingabewertes ($X_i$) in einer chaotischen Abbildungsfunktion und zur Ausgabe des Ergebnisses ($X_{i+1}$); und
   einen Verzögerungsteil (11) betreibbar zum Verzögern des ausgegebenen Ergebnisses ($X_{i+1}$) der chaotischen Abbildungsfunktion über eine vorbestimmte Zeit, und zum Bereitstellen des verzögerten Wertes als den Eingabewert ($X_i$) für den chaotischen Abbildungsfunktionsteil (10).

8. Vorrichtung zum Erzeugen einer Präambel nach Anspruch 7, **dadurch gekennzeichnet, dass** die chaotische Abbildungsfunktion F eine Bernoulli Shift-Map, eine Tent-Map, eine pervertierte Tent-Map oder eine Ship-Map umfasst.

9. Vorrichtung zum Erzeugen einer Präambel nach Anspruch 6, **dadurch gekennzeichnet, dass** die bestimmten Bits 16 Bits umfassen.

10. Vorrichtung zum Erzeugen einer Präambel nach Anspruch 6, **dadurch gekennzeichnet, dass** die Anzahl N 4 oder 8 umfasst.

11. Vorrichtung zum Erzeugen einer Präambel nach Anspruch 6, **dadurch gekennzeichnet, dass** die Präambel zur Synchronisation und Kanalbestimmung in einem Ultrabreitband-Kommunikationssystem verwendet wird.

**Revendications**

1. Procédé de génération d'un préambule, comprenant :

   (a) le calcul de N échantillons chaotiques ; et
   (b) la transformation des N échantillons chaotiques en N valeurs binaires de certains bits, respectivement, et le calcul d'un bit de séquence chaotique en utilisant successivement les N valeurs binaires ; dans lequel les N échantillons chaotiques sont représentés par $X_i$, et sont calculés en utilisant une fonction de mappage chaotique F par des orbites périodiques, la fonction de mappage chaotique F étant exprimée par $X_{k+1} = F(X_k)$, où $X_o$ est une valeur initiale, et k = 0, 1, 2, 3, ... ;
   **caractérisé en ce que** :

   le procédé comprend, en outre, les étapes de :

   (c) génération d'un préambule d'après le bit de séquence chaotique ;
   (d) calcul d'une fonction de mappage inverse $F^{-1}$ de la fonction de mappage chaotique F, en utilisant la fonction de mappage inverse $F^{-1}$ par rapport à M échantillons chaotiques différents par des orbites périodiques, et de calcul d'une pluralité de valeurs initiales pour les M échantillons chaotiques, respectivement ;
   (e) parmi la pluralité de valeurs initiales calculées pour les M échantillons chaotiques, sélection de M valeurs initiales qui sont séparées d'une distance maximale les unes des autres ; et
   (f) génération de M préambules par rapport aux M valeurs initiales sélectionnées, en réalisant les étapes (a)-(c), respectivement.

2. Procédé de génération d'un préambule selon la revendication 1, **caractérisé en ce que** la fonction de mappage chaotique (F) utilise l'une d'une carte de décalage de Bernoulli, d'une application tente, d'une application tente torsadée, et d'une carte d'expédition.

**3.** Procédé de génération d'un préambule selon la revendication 1, **caractérisé en ce que** le préambule est utilisé dans un système de communication à bande ultra-large, qui prend en charge les picoréseaux multiples, et le nombre des picoréseaux multiples est M.

**4.** Procédé de génération d'un préambule selon la revendication 1, **caractérisé en ce que** les bits en question comprennent 16 bits.

**5.** Procédé de génération d'un préambule selon la revendication 1, **caractérisé en ce que** le nombre N comprend l'un de 4 et 8.

**6.** Appareil de génération d'un préambule, comprenant :

une partie de calcul d'échantillon chaotique pouvant fonctionner pour calculer N échantillons chaotiques, dans lequel les N échantillons chaotiques sont représentés par $X_l$ et sont calculés en utilisant une fonction de mappage chaotique F par les orbites périodiques, la fonction de mappage chaotique F étant exprimée par $X_{k+1} = F(X_k)$, où $X_o$ est une valeur initiale, et k = 0, 1, 2, 3, ... ; et
une partie de calcul de séquence chaotique pouvant fonctionner pour transformer les N échantillons chaotiques en N valeurs binaires de certains bits, respectivement, et pour calculer un bit de séquence chaotique en utilisant successivement N valeurs binaires,

**caractérisé en ce que**
l'appareil de génération d'un préambule comprend, en outre :

une partie de calcul de la valeur initiale pouvant fonctionner pour calculer une fonction de mappage inverse $F^{-1}$ de la fonction de mappage chaotique F, pour utiliser ladite fonction de mappage inverse $F^{-1}$ par rapport à M échantillons chaotiques différents, par des orbites périodiques et pour calculer une pluralité de valeurs initiales pour les M échantillons chaotiques,
une partie de sélection de la valeur initiale pouvant fonctionner pour sélectionner M valeurs initiales qui sont séparées d'une distance maximale les unes des autres parmi la pluralité de valeurs initiales calculées pour les M échantillons chaotiques ; et
une partie de génération d'un préambule pouvant fonctionner pour générer un préambule à partir du bit de séquence chaotique pour générer M préambules par rapport aux M valeurs initiales sélectionnées, respectivement.

**7.** Appareil de génération d'un préambule selon la revendication 6, **caractérisé en ce que** la partie de calcul d'échantillon chaotique comprend :

une partie de fonction de mappage chaotique (10) pouvant fonctionner pour remplacer une valeur d'entrée ($X_i$) dans une fonction de mappage chaotique et produire le résultat ($X_{i+1}$); et
une partie de retard (11) pouvant fonctionner pour retarder le résultat produit ($X_{i+1}$) de la fonction de mappage chaotique d'un temps prédéterminé, et pour fournir les valeurs retardées comme valeur d'entrée ($X_i$) à la partie de fonction de mappage chaotique (10).

**8.** Appareil de génération d'un préambule selon la revendication 7, **caractérisé en ce que** la fonction de mappage chaotique comprend l'une d'au moins une carte de décalage de Bernoulli, d'une application tente, d'une application tente torsadée et d'une carte d'expédition.

**9.** Appareil de génération d'un préambule selon la revendication 6, **caractérisé en ce que** les bits en question comprennent 16 bits.

**10.** Appareil de génération d'un préambule selon la revendication 6, **caractérisé en ce que** le nombre N comprend l'un de 4 et 8.

**11.** Appareil de génération d'un préambule selon la revendication 6, **caractérisé en ce que** le préambule est utilisé en synchronisation et estimation de canal dans un système de communication à bande ultra-large.

# FIG. 1

| | PHY DATA |
|---|---|
| SIGNAL FOR SYNCHRONIZATION | SIGNAL FOR CHANNEL ESTIMATION |

# FIG. 2

Xo

→ | 1 | 0 | 0 | 1 | 1 | 1 | 0 | 1 | 0 | 1 | 1 | 0 | 0 | 1 | 0 | 1 |

# FIG. 3

16 BITS   16 BITS   16 BITS   16 BITS

$X_0$        $X_1$        $X_2$        $X_3$

# FIG. 4

# FIG. 5

# FIG. 6A

# FIG. 6B

$X_{n+1}$

$X_n$

0   1/2   1

# FIG. 6C

$X_{n+1}$

$X_n$

0   1/4   1/2   3/4   1

# FIG. 6D

$X_{n+1}$

$X_n$

0   1/4   1/2   3/4   1

# FIG. 7A

# FIG. 7B

# FIG. 8

$Z_3^1 = 0.1$

| $Z_3^1$ | $Z_2^1$ | $Z_1^1$ | $Z_0^1$ |
|---|---|---|---|
| 0001100110011001 | 0000100010001000 | 0000001011011000 | 0000000011110010 |
| 0001100110011001 | 1110111011101110 | 0100111110100100 | 0001101010001100 |
| 0001100110011001 | 0000100010001000 | 1111101001001111 | 0101001101101111 |
| 0001100110011001 | 1110111011101110 | 0110000010110110 | 0010000000111100 |
| 0001100110011001 | 0000100010001000 | 0000001011011000 | 1111111000011010 |
| 0001100110011001 | 1110111011101110 | 0100111110100100 | 1100101011100111 |
| 0001100110011001 | 0000100010001000 | 1111101001001111 | 0101100100100000 |
| 0001100110011001 | 1110111011101110 | 0110000010110110 | 1011111110000110 |

→ Maximum distance 1

$Z_3^2 = 0.25$

| | | | |
|---|---|---|---|
| 0100000000000000 | 0001010101010101 | 0000011100011100 | 0000001001011110 |
| 0100000000000000 | 1101010101010101 | 0100011100011100 | 0001011110110100 |
| 0100000000000000 | 0001010101010101 | 1111000111000111 | 0101000010010111 |
| 0100000000000000 | 1101010101010101 | 0111000111000111 | 0010010111101101 |
| 0100000000000000 | 0001010101010101 | 0000011100011100 | 1111101101000010 |
| 0100000000000000 | 1101010101010101 | 0100011100011100 | 1101000010010111 |
| 0100000000000000 | 0001010101010101 | 1111000111000111 | 0101111011010000 |
| 0100000000000000 | 1101010101010101 | 0111000111000111 | 1011010000100101 |

# FIG. 9

# FIG. 10

# FIG. 11

# FIG. 12

# FIG. 13

# FIG. 14

# FIG. 15

# FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 47922003 P
- KR 200371618

- US 20010038674 A

**Non-patent literature cited in the description**

- **DMITRIEV A. S. et al.** High-Rate Digital Data Transmission using Dynamic Chaos. *Soviet Journal of Communications Technology and Electronics,* March 1999, vol. 44 (3), 302-306